# EUROPEAN PATENT APPLICATION

(11) **EP 4 761 189 A1**
(43) Date of publication of application: **17.06.2026**
(21) Application number: 25219622.5
(22) Date of filing: 01.12.2025
(51) Int. Cl.: H04L 12/40, H04L 61/5038, H01M 10/42

(54) **ENERGY STORAGE SYSTEM AND COMMUNICATION METHOD THEREOF**

(30) Priority: 11.12.2024 KR 20240183489
(71) Applicant: SAMSUNG SDI CO., LTD., Yongin-si, Gyeonggi-do 17084 (KR)
(72) Inventor: Park, Jinhyuk, Yongin-si, Gyeonggi-do 17084 (KR); Kang, Dongyoun, Yongin-si, Gyeonggi-do 17084 (KR); Kang, Sungkoo, Yongin-si, Gyeonggi-do 17084 (KR)
(74) Representative: Meissner Bolte Partnerschaft mbB

(57) **Abstract**

An energy storage system includes a plurality of slave battery management systems (BMS)s, and a master BMS connected to the plurality of slave BMSs, wherein, in a first mode, at least one of the plurality of slave BMSs is connected in series with the master BMS, and in a second mode, the plurality of slave BMSs are connected in parallel with the master BMS.

## Description

### CROSS-REFERENCE TO RELATED APPLICATIONS

### FIELD

The present invention relates to an energy storage system and a communication method thereof.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Among internal communication methods of an energy storage system (ESS) is Controller Area Network (CAN) communication. CAN communication may support a multiple transmission and reception method in which all devices on the network may directly transmit and receive data without a central controller. By using CAN communication, data may be transmitted in a broadcast manner, and each node may identify data through an ID assigned to itself. That is, each node may use its ID to identify, from the broadcast data, who is requesting what from whom and to what it should respond.

The herein information disclosed in this background section is for enhancement of understanding of the background of the present invention, and therefore, it may contain information that does not constitute related (or prior) art.

### SUMMARY

To resolve the herein-described issues, the present invention provides an energy storage system and a communication method thereof.

These and other aspects and features of the present invention will be described in or will be apparent from the following description of embodiments of the present invention.

The present invention concerns an energy storage system including a plurality of slave battery management systems, in particular slave BMSs, and a master battery management system, in particular master BMS, connected to the plurality of slave battery management systems, wherein, in a first mode, at least one of the plurality of slave battery management systems is connected in series with the master battery management system, and in a second mode, the plurality of slave battery management systems are connected in parallel with the master battery management system.

In the following, the term "battery management system" is referred to as "BMS".

In some embodiments, the first mode may be a mode in which each of the plurality of slave BMSs sets a unique identifier (ID) as its own ID.

In some embodiments, the second mode may be a mode in which the master BMS communicates, in a broadcast manner, with the plurality of slave BMSs connected in parallel using the ID in each of the plurality of slave BMSs and a first communication protocol.

In some embodiments, in the second mode, the master BMS may communicate, in a broadcast manner via a CAN (Controller Area Network) bus, with the plurality of slave BMSs connected in parallel, using a CAN protocol.

In some embodiments, in the second mode, each of the plurality of slave BMSs may be directly connected to the master BMS via a CAN bus.

In some embodiments, the plurality of slave BMSs may include a first slave BMS directly connected to the master BMS via a CAN bus, and a second slave BMS connected in series with the master BMS using a first switch included in the first slave BMS or connected in parallel with the master BMS via the CAN bus.

In some embodiments, the first switch may be configured to provide a first path that connects the second slave BMS directly to the first slave BMS so as to connect the second slave BMS in series with the master BMS, or a second path that connects the second slave BMS to the CAN bus so as to connect the second slave BMS in parallel with the master BMS.

In some embodiments, in the first mode, the master BMS may transmit an ID setting command to the first slave BMS that is directly connected, and, in response to receiving the ID setting command, the first slave BMS may set a first ID as its own ID.

In some embodiments, in the first mode, after the first ID is set, the first slave BMS may transmit the ID setting command and the first ID to the second slave BMS, and in response to receiving the ID setting command and the first ID, the second slave BMS may set a second ID as its own ID.

In some embodiments, the second slave BMS may be configured to, in response to receiving the ID setting command and the first ID, set the second ID by adding a predetermined value to the first ID.

In some embodiments, in the first mode, after the second ID is set, the second slave BMS may transmit an ID setting completion message to the first slave BMS connected in series.

In some embodiments, in the first mode, in response to receiving the ID setting completion message, the first slave BMS may control the first switch so that the second slave BMS is connected in parallel with the master BMS via the CAN bus.

In some embodiments, the plurality of slave BMS may further include a third slave BMS connected in series with the master BMS or in parallel with the master BMS via the CAN bus, and in the first mode, in response to receiving the ID setting command and a unique ID set in a preceding slave BMS, the third slave BMS may set a third ID as its own ID.

In some embodiments, the third slave BMS may include a third switch configured to provide a third path for connecting the third slave BMS in series with another slave BMS or a fourth path for releasing the series connection with the other slave BMS, the third slave BMS may receive a number of the plurality of slave BMSs from the master BMS, and based on determining that the third slave BMS is a last node based on the number of the plurality of slave BMSs, the third slave BMS may control the third switch so that the fourth path is provided.

In some embodiments, the third slave BMS may include a third switch configured to provide a third path for connecting the third slave BMS in series with another slave BMS or a fourth path for releasing the series connection with the other slave BMS, and upon expiration of a predetermined time without receipt of an ID setting completion message from the other slave BMS, the third slave BMS may control the third switch so that the fourth path is provided.

In some embodiments, the third slave BMS may transmit the third ID to the master BMS as an ID of a last node, and wherein, in response to receiving the ID of the last node, the master BMS may operate in the second mode.

In some embodiments, the master BMS communicates, using a second communication protocol, with at least one of an Energy Management System (EMS) and a Supervisory Control and Data Acquisition (SCADA) system.

In some embodiments, the second communication protocol may include a Transmission Control Protocol/Internet Protocol (TCP/IP).

In some embodiments, in the first mode, as the plurality of slave BMSs sequentially set their respective unique IDs, the number of slave BMSs among the plurality of slave BMSs that are connected in series with the master BMS may decrease and the number of slave BMSs connected in parallel with the master BMS may increase.

In some embodiments, a communication method of an energy storage system, includes in a first mode in which at least one of a plurality of slave battery management systems is connected in series with a master BMS, sequentially setting a unique ID in each of the plurality of slave BMSs, in response to determining that ID setting of the plurality of slave BMSs is completed, switching from the first mode to a second mode by the master BMS, and in the second mode in which the plurality of slave BMSs are connected in parallel with the master BMS, communicating, in a broadcast manner, with the plurality of slave BMSs by the master BMS using the set IDs, wherein, in the first mode, as the plurality of slave BMSs sequentially set their respective unique IDs, the number of slave BMSs among the plurality of slave BMSs that are connected in series with the master BMS decreases and the number of slave BMSs connected in parallel with the master BMS increases.

However, aspects and features of the present invention are not limited to those described herein, and other aspects and features not mentioned will be clearly understood by a person skilled in the art from the detailed description, described herein.

### BRIEF DESCRIPTION OF THE DRAWINGS

The following drawings attached to this specification illustrate embodiments of the present invention, and further describe aspects and features of the present invention together with the detailed description of the present invention. Thus, the present invention should not be construed as being limited to the drawings:
FIG. 1 illustrates an example configuration of an energy storage system according to embodiments of the present invention.
FIG. 2 illustrates an example block diagram of an energy storage system according to embodiments of the present invention.
FIG. 3 is a circuit diagram illustrating an example of an energy storage system according to embodiments of the present invention.
FIG. 4 is a diagram illustrating an example of how a slave BMS sets an ID in the energy storage system of FIG. 3.
FIG. 5 is a diagram illustrating an example of how a slave BMS sets an ID in the energy storage system of FIG. 3.
FIG. 6 is a diagram illustrating an example of how a slave BMS sets an ID in the energy storage system of FIG. 3.
FIG. 7 is a circuit diagram illustrating an example of an energy storage system according to embodiments of the present invention.
FIG. 8 is a diagram illustrating an example of how a slave BMS sets an ID in the energy storage system of FIG. 7.
FIG. 9 is a diagram illustrating an example of how a slave BMS sets an ID in the energy storage system of FIG. 7.
FIG. 10 is a diagram illustrating an example method of identifying a last slave BMS in the energy storage system of FIG. 7.
FIG. 11 is a diagram illustrating an example method of identifying a last slave BMS in the energy storage system of FIG. 7.
FIG. 12 is a diagram illustrating an example method of identifying a last slave BMS in the energy storage system of FIG. 7.
FIG. 13 is a diagram illustrating an example of how CAN communication is performed in an energy storage system according to embodiments of the present invention.
FIG. 14 is a diagram illustrating an example of communication performed in an energy storage system according to embodiments of the present invention.
FIG. 15 is a flowchart illustrating an example of a communication method of an energy storage system according to embodiments of the present invention.

### DETAILED DESCRIPTION

Hereinafter, embodiments of the present invention will be described, in detail, with reference to the accompanying drawings. The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term to explain his/her invention in the best way.

The embodiments described in this specification and the configurations shown in the drawings are only some of the embodiments of the present invention and do not represent all of the technical ideas, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "slave," "above," "master," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all slave numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the master (or slave) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

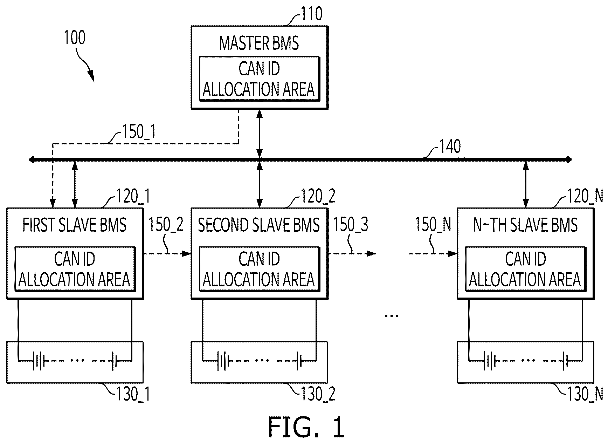

FIG. 1 illustrates an example configuration of an energy storage system 100 according to embodiments of the present invention. The energy storage system 100 may include a master battery management system (BMS) 110, a plurality of slave BMS 120_1-120_N, a plurality of battery modules 130_1-130_N, a Controller Area Network (CAN) bus 140, and ID setting communication paths 150_1-150_N. Here, each of the plurality of battery modules 130_1-130_N may include a plurality of battery racks.

In embodiments, the master BMS 110 may transmit and receive information to and from the plurality of slave BMS 120_1-120_N. The master BMS 110 may transmit and receive information with the plurality of slave BMS 120_1-120_N using a CAN communication method. In this case, each of the plurality of slave BMS 120_1-120_N may identify messages received through the CAN bus 140 using an ID stored in a CAN ID allocation area (e.g., a memory).

In embodiments, the master BMS 110 may determine whether a unique identifier (ID) is set for each of the plurality of slave BMS 120_1-120_N. For example, the master BMS 110 may request status information or issue charge/discharge commands to a specific slave BMS among the plurality of slave BMS 120_1-120_N using IDs. In this case, the specific slave BMS may determine, via the set ID, whether the request from the master BMS 110 is directed to itself. If no ID is set for the slave BMS, the master BMS 110 may perform an ID setting procedure for at least one of the plurality of slave BMS 120_1-120_N. Accordingly, the master BMS 110 may verify whether each of the plurality of slave BMS 120_1-120_N is in a state of being identifiable and transmit accurate commands to each of the plurality of slave BMS 120_1-120_N. In this way, normal operation of the energy storage system can be ensured.

According to embodiments, if the master BMS 110 determines that unique IDs have been set for each of the plurality of slave BMS 120_1 to 120_N, the master BMS 110 may request status information from the plurality of BMS 120_1 to 120_N. Here, the status information may include cell voltage information, cell temperature information, charge/discharge status information, and/or cell balancing status information associated with the plurality of battery modules 130_1 to 130_N, which are collected by the plurality of slave BMS 120_1 to 120_N.

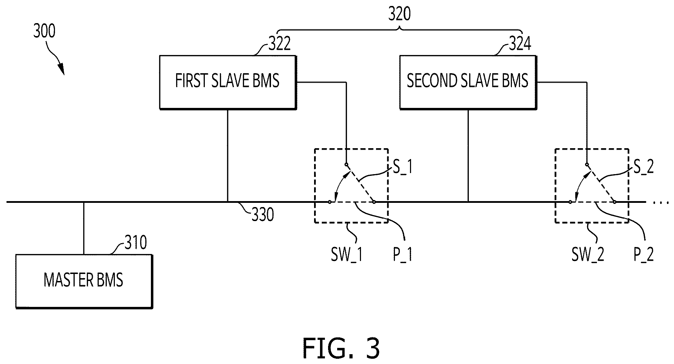

In embodiments, if the master BMS 110 determines that at least one of the plurality of slave BMS 120_1-120_N does not have an ID, the master BMS 110 may switch to a first mode in which at least one of the plurality of slave BMS 120_1-120_N are connected in series with the master BMS 110. The first mode may be a mode for assigning different IDs to each of the plurality of slave BMS 120_1-120_N. A detailed description of ID setting for the plurality of slave BMS is provided herein with reference to FIG. 3.

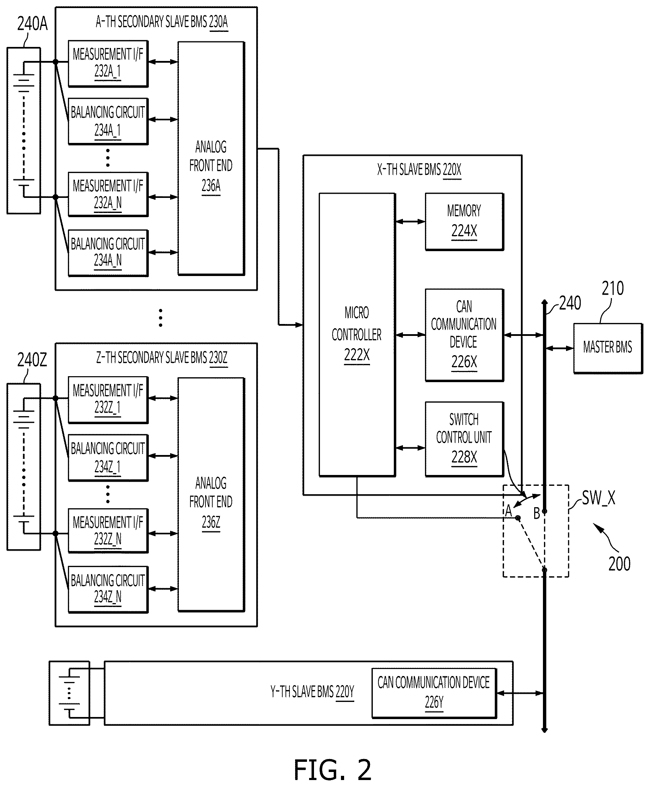

FIG. 2 illustrates an example block diagram of an energy storage system 200 according to embodiments of the present invention. In embodiments, the energy storage system 200 may include a master BMS 210, one or more slave BMS 220X, 220Y, and one or more secondary slave BMS 230A, 230Z. Each of the slave BMS 220X, 220Y may measure the status of battery cells from battery modules 240A, 240Z, which are connected in series, through one or more secondary slave BMS 230A, 230Z, and may transmit that status to the master BMS 210 and/or subsequent slave BMS.

By way of example, describing the configuration of the slave BMS 220X representatively, the slave BMS 220X may include a microcontroller 222X, a memory 224X, a CAN communication device 226X, and a switch controller 228X. The slave BMS 220X may be connected (for example, in series) to a plurality of secondary slave BMS that include a A-th (first) secondary slave BMS 230A and a Z-th (last) secondary slave BMS 230Z. Each of the plurality of secondary slave BMS may be connected to battery modules 240A, 240Z.

In embodiments, each secondary slave BMS may include measurement interfaces, balancing circuits, and an analog front end. For example, the A-th secondary slave BMS 230A may include a plurality of measurement interfaces 232A_1-232A_N, a plurality of balancing circuits 234A_1-234A_N, and an analog front end 236A. Also, the Z-th secondary slave BMS 230Z may include a plurality of measurement interfaces 232Z_1-232Z_N, a plurality of balancing circuits 234Z_1-234Z_N, and an analog front end 236Z.

In embodiments, each of the secondary slave BMS 230X, 230Z may be connected to a battery module 240A, 240Z including a plurality of battery cells so as to monitor battery cell status information (voltage, current, temperature, etc.). For example, the A-th secondary slave BMS 230A may be connected to an A-th battery module 240A including a plurality of battery cells. Each measurement interface 232A_1-232A_N and each balancing circuit 234A_1-234A_N included in the A-th secondary slave BMS 230A may measure status information of the individual battery cells of the A-th battery module 240A. Also, the Z-th secondary slave BMS 230Z may be connected to a Z-th battery module 240Z including a plurality of battery cells. Each measurement interface 232Z_1-232Z_N and each balancing circuit 234Z_1-234Z_N included in the Z-th secondary slave BMS 230Z may measure status information of the individual battery cells of the last battery module 240Z.

In embodiments, the analog front end 236A, 236Z may measure analog signals representing the status of battery cells via each measurement interface 232A_1-232A_N, 232Z_1-232Z_N and/or each balancing circuit 234A_1-234A_N, 234Z_1-234Z_N and convert them into digital signals. As one example, the A-th analog front end 236A may receive analog signals representing the status of battery cells from each measurement interface 232A_1-232A_N and each balancing circuit 234A_1-234A_N and convert them into digital signals. Likewise, the Z-th analog front end 236Z may receive analog signals representing the status of battery cells from each measurement interface 232Z_1-232Z_N and each balancing circuit 234Z_1-234Z_N and convert them into digital signals. The analog front ends 236A, 236Z may transmit the converted digital signals to the microcontroller unit 222X included in the X-th slave BMS 220X.

In embodiments, the microcontroller unit 222X may monitor the status of battery cells based on the status information of each battery cell received from each analog front end 236A-236Z included in a plurality of secondary slave BMS 230A-230Z connected in series. For example, the microcontroller unit 222X included in the X-th slave BMS 220X may determine, based on at least one of the status information of each battery cell received from the plurality of analog front ends 236A-236Z, whether there is an overvoltage or under-voltage status in the battery cells. In another example, the microcontroller unit 222X included in the X-th slave BMS 220X may detect a voltage difference among the battery cells based on at least one of the status information of each battery cell received from the plurality of analog front ends 236A-236Z. Further, when the microcontroller unit 222X included in the X-th slave BMS 220X detects a voltage difference among the battery cells, the microcontroller unit 222X may adjust the voltage difference among the battery cells using the balancing circuits 234A_1-234A_N, 234Z_1-234Z_N included in each of the plurality of secondary slave BMS 230A-230Z connected in series so as to balance the voltages of the battery cells.

In embodiments, each slave BMS 220X, 220Y may directly transmit the status information of the battery modules 240A, 240Z (e.g., battery cell status information, etc.) connected through the secondary slave BMS, along with status information of the slave BMS 220X, 220Y itself (e.g., fault information of a battery management module), to the master BMS 210. For example, the microcontroller unit 222X may transmit, via the CAN communication device 226X, the status information of each of the battery modules 240A-240Z connected through a plurality of secondary slave BMS 240A-240Z and the status information of the slave BMS 220X to a battery management master module. In this case, each slave BMS 220X, 220Y and the master BMS 210 may directly communicate via the CAN bus 240 using the CAN protocol and the set ID. Here, the ID of the X-th slave BMS 220X may be stored in the memory 224X. However, if a CAN ID required for CAN communication is not set in the slave BMS 220X, 220Y, the master BMS 210 and the plurality of slave BMS 220X, 220Y may be unable to perform normal CAN communication via the CAN bus 240. Accordingly, each of the slave BMS 220X, 220Y may set a unique ID while controlling the connection relationship between itself, a subsequent slave BMS, and the master BMS 210. Detailed descriptions of ID settings for the plurality of slave BMS 220X, 220Y are provided herein with reference to FIG. 3.

In embodiments, the switch controller 228X included in the X-th slave BMS 220X may control the contact of a X-th switch SW_X of the X-th slave BMS 220X to position A or B to manage a connection path between a subsequent slave BMS 220Y (Y-th slave BMS)and the master BMS 210. Here, the X-th switch SW_X may be disposed inside or outside the X-th slave BMS 220X.

For example, if the contact of the X-th switch SW_X changes from position B to position A, the Y-th slave BMS 220Y is disconnected from the CAN bus 240 and may be directly connected to the X-th slave BMS 220X. In this case, the Y-th slave BMS 220Y may be indirectly connected to the master BMS 210 through the X-th BMS 220X. In this case, the Y-th slave BMS 220Y may be connected in series with the master BMS 210 and/or the X-th slave BMS 220X.

In another example, if the contact of the X-th switch SW_X changes from position A to position B, the Y-th slave BMS 220Y is disconnected from the direct connection to the X-th slave BMS 220X and may be connected to the CAN bus 240. Herein, the Y-th slave BMS 220Y may be directly connected to the master BMS 210 via the CAN bus 240. In this case, the Y-th slave BMS 220Y may be connected in parallel with the master BMS 210.

FIG. 3 is a circuit diagram illustrating an example of an energy storage system 300 according to embodiments of the present invention. Referring to FIG. 3, the energy storage system 300 may include a master BMS 310 and a plurality of slave BMS 320. The energy storage system 300 may correspond to the energy storage system 100 of FIG. 1 or the energy storage system 200 of FIG. 2. Hereinafter, for the explanation of FIG. 3, details overlapping with those of FIGS. 1 and 2 may be omitted.

In embodiments, the master BMS 310 may be connected to the plurality of slave BMS 320. For example, the master BMS 310 and the plurality of slave BMS 320 may be connected via a CAN bus 330. Each of the plurality of slave BMS 320 may already have an ID required for CAN communication. By doing so, the master BMS 310 may communicate, in a broadcast manner via the CAN bus 330, with the plurality of slave BMS 320 having set IDs, using a CAN protocol.

In embodiments, the plurality of slave BMS 320 may include a first slave BMS 322 and a second slave BMS 324. Although FIG. 3 shows the master BMS 310 connected to the first slave BMS 322 and the second slave BMS 324, the number of slave BMS 320 is not limited to two. For example, one or more slave BMS may be connected to the master BMS 310.

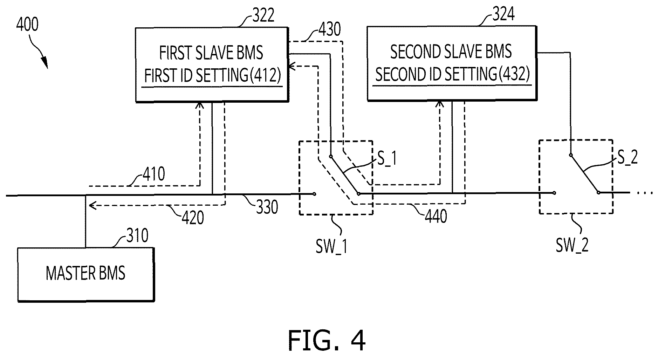

In embodiments, the manner in which each of the plurality of slave BMS 320 is connected to the master BMS 310 may differ depending on whether or not its ID for CAN communication has been set. For example, in a first mode where unique IDs are assigned to the plurality of slave BMS 320, at least one of the plurality of slave BMS 320 may be connected in series with the master BMS 310. That is, a certain slave BMS may be directly connected to the immediately preceding slave BMS, and thus connected to the master BMS 310 via that preceding slave BMS. The ID setting process for the plurality of slave BMS 320 is described herein with reference to FIG. 4.

In embodiments, the plurality of slave BMS 320 may be connected in parallel with the master BMS 310. For example, in a second mode in which the master BMS 310 communicates in a broadcast manner with the plurality of slave BMS 320 using the IDs set by the master BMS, the plurality of slave BMS 320 may be connected in parallel with the master BMS 310 via the CAN bus 330. In this case, each slave BMS 320 may be directly connected to the master BMS 310 via the CAN bus 330.

In embodiments, the first slave BMS 322 may include a first switch SW_1. The arrangement of the first switch SW_1 is not limited to the example shown, and the first switch SW_1 may be located inside or outside the first slave BMS 322.

In embodiments, the first slave BMS 322 may control the first switch SW_1. Here, the controlling entity of the first switch SW_1 is not limited. The first switch SW_1 may be indirectly controlled by the master BMS 310 via the first slave BMS 322. In another example, the first switch SW_1 may be controlled directly by the master BMS 310.

In embodiments, the first switch SW_1 may provide a first path S_1 for connecting the second slave BMS 324 directly to the first slave BMS 322 so that the second slave BMS 324 is connected in series to the master BMS 310, or a second path P_1 for connecting the second slave BMS 324 to the CAN bus 330 so that the second slave BMS 324 is connected in parallel to the master BMS 310. Through such configuration, the second slave BMS 324 may be connected in series with or parallel to the master BMS 310 via the first switch SW_1.

In embodiments, the second slave BMS 324 may include a second switch SW_2. The arrangement of the second switch SW_2 is not limited to the example shown, and the second switch SW_2 may be located inside or outside the second slave BMS 324.

In embodiments, the second slave BMS 324 may control the second switch SW_2. Here, the controlling entity of the second switch SW_2 is not limited. The second switch SW_2 may be indirectly controlled by the master BMS 310 via the second slave BMS 324. In another example, the second switch SW_2 may be controlled directly by the master BMS 310.

In embodiments, if a subsequent slave BMS is placed after the second slave BMS 324, the second switch SW_2 may provide a path S_2 for connecting the subsequent slave BMS directly to the second slave BMS 324 in series with the master BMS 310, or a path P_2 for connecting the subsequent slave BMS to the CAN bus 330 such that it is connected in parallel with the master BMS 310. Thus, the subsequent slave BMS may be connected in series or parallel to the master BMS 310 via the second switch SW_2.

FIG. 4 is a diagram 400 illustrating an example of how a slave BMS sets an ID in the energy storage system 300 of FIG. 3. In embodiments, in response to determining that no ID is set in the plurality of slave BMS 322, 324, the master BMS 310 may operate in the first mode for ID setting. Here, the first mode may refer to a mode in which each slave BMS sets its own unique ID. Overlapping details between FIG. 4 and FIGS. 1-3 may be omitted.

In the first mode, at least one of the plurality of slave BMS 322, 324 may be connected in series with the master BMS 310. At the start of the first mode, all the slave BMS 322, 324 may be connected in series with the master BMS 310. For example, the first slave BMS 322 may be directly connected to the master BMS 310 via the CAN bus 330. In addition, the second slave BMS 324 may be directly connected to the first slave BMS 322 via the first path S_1 of the first switch SW_1 and thereby connected in series with the master BMS 310. A third slave BMS (not shown) may be directly connected to the second slave BMS 324 via the first path S_2 of the second switch SW_2 and thereby connected in series with the master BMS 310. In a similar manner, the other slave BMS may also be connected in series with the master BMS 310.

In the first mode, the master BMS 310 may transmit an ID setting command 410 to the directly connected first slave BMS 322. For example, the master BMS 310 may transmit the ID setting command 410 to the first slave BMS 322 via the CAN bus 330. The ID setting command may include information such as the ID setting rule for the plurality of slave BMS 322, 324, an initial ID value, and a final ID value, although the information included is not limited thereto. For example, ID setting command may also include information about the number of slave BMS connected to the master BMS 310.

In the first mode, the first slave BMS 322 may receive the ID setting command. In response to receiving the ID setting command, the first slave BMS 322 may set 412 a first ID as its own ID 412. Here, the first ID may be determined based on the ID setting command. For example, the first slave BMS 322 may use an initial ID value included in the ID setting command as the first ID.

In embodiments, after setting the first ID, the first slave BMS 322 may transmit a first ID setting completion message 420 to the master BMS 310. In this case, the first slave BMS 322 that has the first ID set may transmit the first ID setting completion message to the master BMS 310 via the CAN bus 330, using the CAN protocol. Accordingly, the master BMS 310 may recognize that the first slave BMS 322 has completed setting the first ID.

After setting the first ID, the first slave BMS 322 may transmit (430) the ID setting command and the first ID to the second slave BMS 324. Here, the second slave BMS 324 may be directly connected to the first slave BMS 322 via the first path S_1 of the first switch SW_1 and connected in series with the master BMS 310 through the first slave BMS 322. Therefore, the first slave BMS 322 may transmit (430) the ID setting command and the first ID to the second slave BMS 324 via the first path S_1 of the first switch SW_1.

In embodiments, the second slave BMS 324 may receive the ID setting command and the first ID from the first slave BMS 322. In response to receiving the ID setting command and the first ID, the second slave BMS 324 may set a second ID as its own ID 432. Here, the second ID may be determined based on the ID setting command. For example, the second slave BMS 324 may determine the second ID based on the first ID and the ID setting rule included in the ID setting command. For instance, in response to receiving the ID setting command and the first ID, the second slave BMS 324 may add a predetermined value (e.g., 1) to the first ID to set the second ID. However, the method of setting the second ID is not limited to this as long as the second ID differs from the first ID.

After setting the second ID, the second slave BMS 324 may transmit a second ID setting completion message 440 to the first slave BMS 322 connected in series. Here, the second slave BMS 324, which has the second ID set, may transmit the second ID setting completion message to the first slave BMS 322 connected in series via the first path S_1 of the first switch SW_1. Accordingly, the first slave BMS 322 may recognize that the second slave BMS 324 has completed setting the second ID.

Through this configuration, automating the ID setting of the plurality of slave BMS 322, 324 included in the energy storage system 300 may reduce the time required for the ID setting operation. Moreover, human error that may occur due to manual tasks such as writing individual CAN IDs for the slave BMS 322, 324 or individually setting CAN IDs using switches in the slave BMS 322, 324 may be prevented.

Furthermore, through this configuration, rather than having the IDs of the plurality of slave BMS 322, 324 included in the energy storage system 300 be set all at once in a broadcast manner by the master BMS 310, each slave BMS 322, 324 may independently assign itself a unique ID based on sequentially received ID setting commands. As a result, the system's flexibility and autonomy may be improved. This can reduce overload on the master system and enhance collaboration among the BMS, thereby strengthening the stability of the entire system.

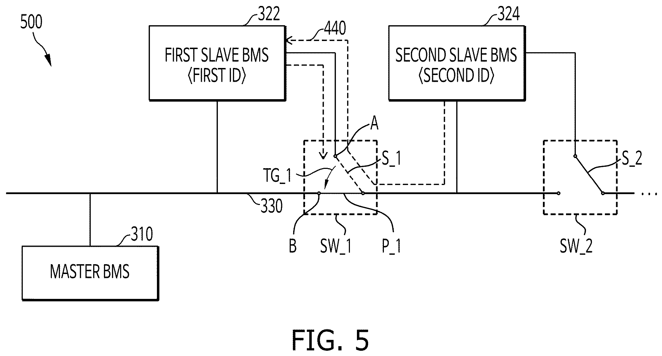

FIG. 5 is a diagram 500 illustrating an example of how a slave BMS sets an ID in the energy storage system 300 of FIG. 3. Overlapping details between FIG. 5 and FIGS. 1-4 may be omitted.

In the first mode, the first slave BMS 322 may receive the second ID setting completion message 440 transmitted by the second slave BMS 324 that has set the second ID. In response to receiving the second ID setting completion message, the first slave BMS 322 may control the first switch SW_1 so that the second slave BMS 324 is connected in parallel with the master BMS 310 via the CAN bus 330. For example, the first slave BMS 322 may switch/toggle (TG_1) the contact of the first switch SW_1 from A to B, thereby disabling the first path S_1 that connects the second slave BMS 324 in series with the master BMS 310 and providing the second path P_1 that connects the second slave BMS 324 in parallel with the master BMS 310.

Through this, after setting the second ID required for CAN communication, the second slave BMS 324 may be connected to the CAN bus 330 and thus become capable of CAN communication with the master BMS 310 using the CAN protocol.

Through this configuration, in the first mode, as the plurality of slave BMS sequentially set their respective unique IDs, the number of slave BMS connected in series with the master BMS decreases and the number of slave BMS connected in parallel with the master BMS increases.

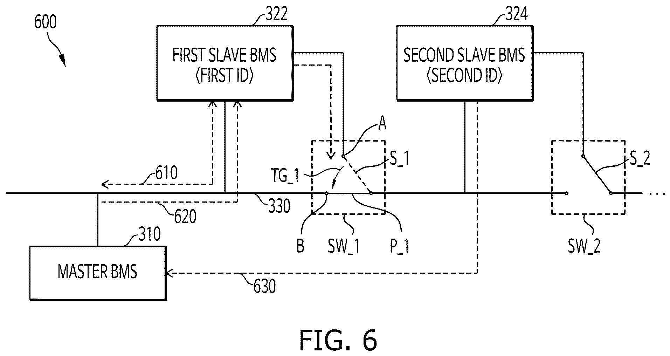

FIG. 6 is a diagram 600 illustrating an example of how a slave BMS sets an ID in the energy storage system 300 of FIG. 3. Overlapping details between FIG. 6 and FIGS. 1-5 may be omitted.

The first slave BMS 322 may receive the second ID setting completion message 440 transmitted by the second slave BMS 324. Here, the first slave BMS 322 may already have its first ID set and may be capable of performing CAN communication with the master BMS 310 via the CAN bus 330 using the CAN protocol. In response to receiving the second ID setting completion message, the first slave BMS 322 may transmit the second ID setting completion message 610 to the master BMS 310.

In embodiments, the master BMS 310 may receive the second ID setting completion message via the first slave BMS 322. Accordingly, the master BMS 310 may recognize that the second slave BMS 324 has completed setting the second ID. In response to receiving the second ID setting completion message, the master BMS 310 may transmit a command 620 to control the first switch SW_1 to the first slave BMS 322. The command for controlling the first switch SW_1 may include an instruction for the first slave BMS 322 to switch/toggle (TG_1) the contact of the first switch SW_1 from A to B, thereby disabling the first path S_1 and providing the second path P_1.

Through this, the second slave BMS 324, which has set the second ID required for CAN communication and is connected to the CAN bus 330, may then be capable of CAN communication 630 with the master BMS 310 using the CAN protocol.

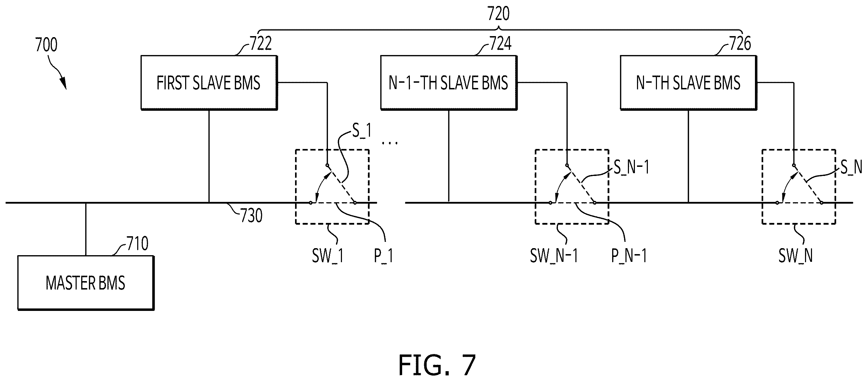

FIG. 7 is a circuit diagram illustrating an example of an energy storage system 700 according to embodiments of the present invention. The energy storage system 700 may correspond to the energy storage system 100 of FIG. 1, the energy storage system 200 of FIG. 2, or the energy storage system 300 of FIG. 3. Hereinafter, overlapping details between FIG. 7 and FIGS. 1-6 may be omitted.

In embodiments, the energy storage system 700 may include a master BMS 710 and a plurality of slave BMS 720. The master BMS 710 may be connected to a CAN bus 730. In addition, the plurality of slave BMS 720 may include a first slave BMS 722, an (N-1)-th slave BMS 724, and an N-th slave BMS 726. Here, the N-th slave BMS 726 may be a subsequent slave BMS to the (N-1)-th slave BMS 724, and the (N-1)-th slave BMS 724 may be a preceding slave BMS to the N-th slave BMS 726.

As shown in FIG. 7, the plurality of slave BMS 720 may include N slave BMS, where N is a natural number. Here, the N-th slave BMS 726 may be the last among the plurality of slave BMS 720. As one example, if N is 1, the energy storage system 700 may include a single first slave BMS. As another example, if N is 2, the energy storage system 700 may include a first and a second slave BMS. As yet another example, if N is 3, the energy storage system 700 may include a first to a third slave BMS.

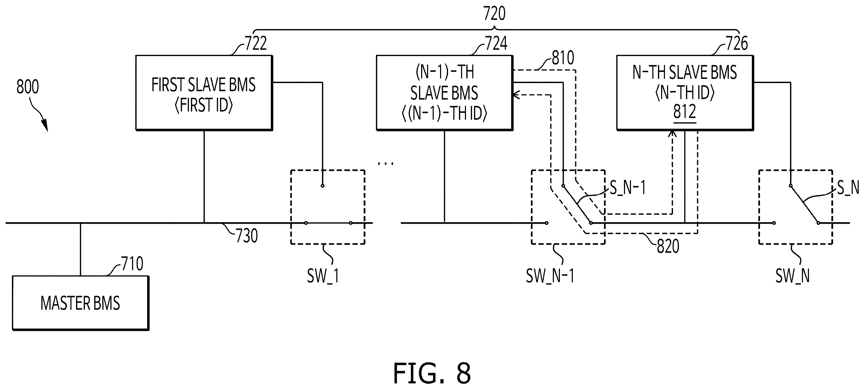

In embodiments, the manner in which each of the plurality of slave BMS 720 is connected to the master BMS 710 may differ depending on whether an ID is set. For example, a slave BMS with no ID set may be connected in series to the master BMS 710, while a slave BMS whose ID setting is complete may be connected in parallel to the master BMS 710. A description of the ID setting process for the plurality of slave BMS 720 is provided herein with reference to FIG. 8.

In embodiments, the first slave BMS 722 may be connected in parallel to the master BMS 710 and may be directly connected to the master BMS 710 via the CAN bus 730. The first slave BMS 722 may include a first switch SW_1 that provides either a first path S_1 for connecting a subsequent slave BMS in series with the master BMS 710 or a second path P_1 for connecting that subsequent slave BMS in parallel with the master BMS 710.

In embodiments, the N-th slave BMS 726 may be connected in series to the master BMS 710 via the (N-1)-th slave BMS 724 or connected in parallel to the master BMS 710 via the CAN bus 730. Here, the (N-1)-th slave BMS 724 may include an (N-1)-th switch SW_(N-1). The (N-1)-th switch SW_(N-1) may provide a path S_(N-1) for connecting the N-th slave BMS 726 in series to the master BMS 710 or a path P_(N-1) for connecting the N-th slave BMS 726 in parallel to the master BMS 710. In addition, the N-th slave BMS 726 may include an N-th switch SW_N. The N-th switch SW_N may be configured to provide a third path S_N for connecting the N-th slave BMS 726 in series with another slave BMS or a fourth path P_N for releasing the series connection with the other slave BMS.

FIG. 8 is a diagram 800 illustrating an example of how a slave BMS sets an ID in the energy storage system 700 of FIG. 7. Hereinafter, overlapping details between FIG. 8 and FIGS. 1-7 may be omitted.

In embodiments, the first slave BMS 722 may set a first ID as its own ID. The first slave BMS 722 may control the first switch SW_1 in response to receiving an ID setting completion message from a subsequent slave BMS, so as to connect the subsequent slave BMS to the CAN bus 730 and provide a second path for connecting that subsequent slave BMS in parallel to the master BMS 710.

In embodiments, in response to receiving an ID setting command and an (N-2)-th ID from an (N-2)-th BMS (not shown), the (N-1)-th slave BMS 724 may set an (N-1)-th ID as its own ID. Subsequently, the (N-1)-th slave BMS 724 may transmit the ID setting command and the (N-1)-th ID 810 to the N-th slave BMS 726 via the path S_(N-1) of the (N-1)-th switch SW_(N-1). In response to receiving the ID setting command and the (N-1)-th ID, the N-th slave BMS 726 may set an N-th ID as its own ID 812. Then, the N-th slave BMS 726 may transmit an N-th ID setting completion message 820 to the (N-1)-th slave BMS 724 via the path S_(N-1) of the (N-1)-th switch SW_(N-1).

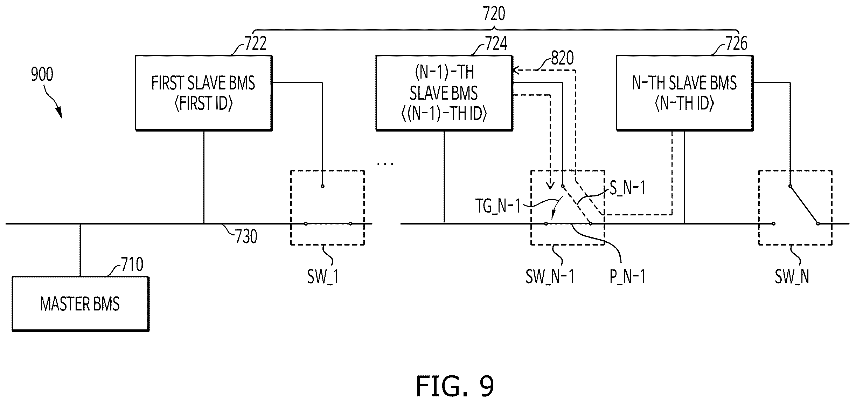

FIG. 9 is a diagram 900 illustrating an example of how a slave BMS sets an ID in the energy storage system 700 of FIG. 7. Hereinafter, overlapping details between FIG. 9 and FIGS. 1-8 may be omitted.

In the first mode, the (N-1)-th slave BMS 724 may receive the N-th ID setting completion message 820 transmitted by the N-th slave BMS 726 that has completed setting the N-th ID. Subsequently, in response to receiving the N-th ID setting completion message, the (N-1)-th slave BMS 724 may control the (N-1)-th switch SW_(N-1) so that the N-th slave BMS 726 is connected in parallel with the master BMS 710 via the CAN bus 730. For example, the (N-1)-th slave BMS 724 may switch/toggle (TG_(N-1)) the contact of the (N-1)-th switch SW_(N-1) to disable the path S_(N-1) connecting the N-th slave BMS 726 in series with the master BMS 710 and provide the path P_(N-1) connecting the N-th slave BMS 726 in parallel with the master BMS 710.

Through this process, after setting the N-th ID required for CAN communication, the N-th slave BMS 726 may switch to a second mode in which it is connected to the CAN bus 730 and is capable of CAN communication with the master BMS 710 using the CAN protocol. Once all slave BMS have completed ID setting, the master BMS 710 and the plurality of slave BMS 720 may operate in the second mode.

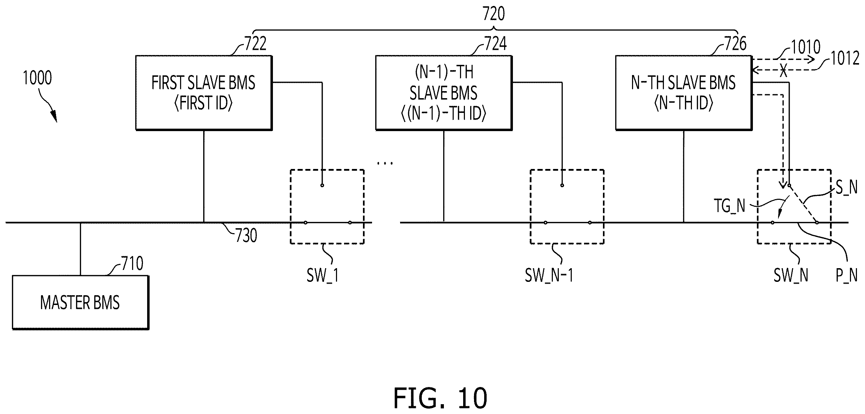

FIG. 10 is a diagram 1000 illustrating an example method of identifying the last slave BMS in the energy storage system 700 of FIG. 7. The energy storage system 700 may include N slave BMS, such as the first slave BMS 722, the (N-1)-th slave BMS 724, and the N-th slave BMS 726. In the first mode, the N-th slave BMS 726 may be the last of the plurality of slave BMS connected in series. Hereinafter, overlapping details between FIG. 10 and FIGS. 1-9 may be omitted.

In embodiments, the first slave BMS 722 may include a first switch SW_1. In the first mode, when ID assignment is complete for the second slave BMS, the first switch SW_1 may connect the second slave BMS to the CAN bus 730, providing a path to connect the second slave BMS in parallel with the master BMS 710.

In embodiments, the (N-1)-th slave BMS 724 may include an (N-1)-th switch SW_(N-1). In the first mode, when ID assignment is complete for the N-th slave BMS 726, the (N-1)-th switch SW_(N-1) may connect the N-th slave BMS 726 to the CAN bus 730, providing a path to connect the N-th slave BMS 726 in parallel with the master BMS 710.

In embodiments, the N-th slave BMS 726 may include an N-th switch SW_N. In the first mode, the N-th switch SW_N may provide a third path S_N that can connect another slave BMS in series.

In embodiments, after setting the N-th ID, the N-th slave BMS 726 may transmit the ID setting command 1010 and the N-th ID via the third path S_N. If the N-th slave BMS 726 is indeed the last slave BMS, because there is no subsequent slave BMS, the N-th slave BMS 726 may not receive any ID setting completion message 1012 from another slave BMS. At this time, in response to not receiving any other slave BMS's ID setting completion message 1012 within a predetermined time (e.g., upon expiration of the predetermined time without receipt of an ID setting completion message from any other slave BMS), the N-th slave BMS 726 may switch/toggle (TG_N) the contact of the N-th switch SW_N, thereby disabling the third path S_N and providing the fourth path P_N.

Through this configuration, the plurality of slave BMS 722, 724, 726 may have their IDs set sequentially, and the master BMS 710 and the plurality of slave BMS 722, 724, 726 may be connected in parallel via the CAN bus 730, thereby switching to the second mode in which CAN communication using a CAN protocol is possible.

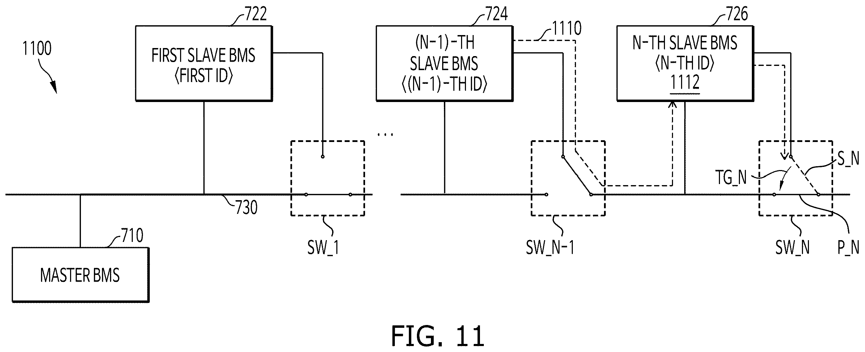

FIG. 11 is a diagram 1100 illustrating an example method of identifying the last slave BMS in the energy storage system 700 of FIG. 7. The energy storage system 700 may include N slave BMS, such as the first slave BMS 722, the (N-1)-th slave BMS 724, and the N-th slave BMS 726. In the first mode, the N-th slave BMS 726 may be the last of the plurality of slave BMS connected in series. Hereinafter, overlapping details between FIG. 11 and FIGS. 1-10 may be omitted.

In embodiments, the N-th slave BMS 726 may not yet have set its N-th ID. In the first mode, after setting its (N-1)-th ID, the (N-1)-th slave BMS 724 may transmit an ID setting command and the (N-1)-th ID 1110 to the N-th slave BMS 726 via the path S_(N-1) of the (N-1)-th switch SW_(N-1). Here, the ID setting command may include information about the number (e.g., N) of slave BMS connected to the master BMS 710.

In embodiments, in response to receiving the ID setting command and the (N-1)-th ID, the N-th slave BMS 726 may set the N-th ID as its own ID 1112. The N-th slave BMS 726 may also determine, based on the number of slave BMS included in the ID setting command, whether it is the last slave BMS. In response to determining that it is the last node, the N-th slave BMS 726 may switch/toggle (TG_N) the contact of the N-th switch so as to disable the third path S_N and provide the fourth path P_N.

Through this, the plurality of slave BMS 722, 724, 726 may sequentially have their IDs set, and the master BMS 710 and the plurality of slave BMS 722, 724, 726 may be connected in parallel via the CAN bus 730, thereby switching to the second mode in which CAN communication is possible using the CAN protocol.

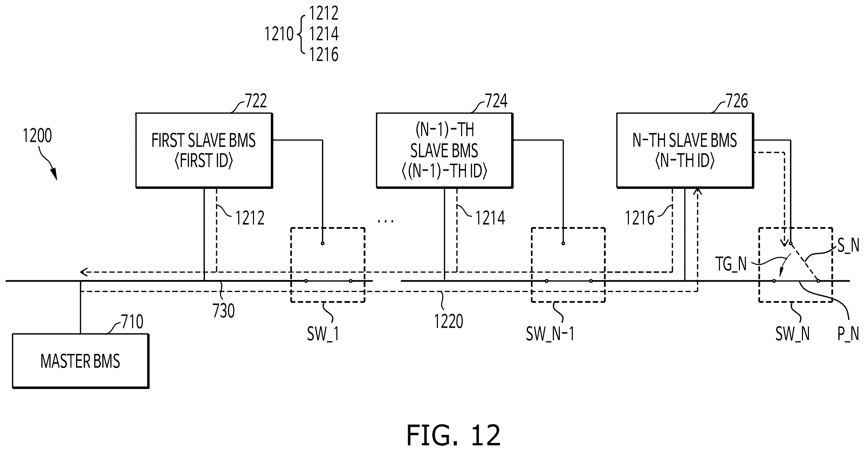

FIG. 12 is a diagram 1200 illustrating an example method of identifying the last slave BMS in the energy storage system 700 of FIG. 7. Hereinafter, overlapping details between FIG. 12 and FIGS. 1-11 may be omitted.

In embodiments, the energy storage system 700 may include N slave BMS, such as the first slave BMS 722, the (N-1)-th slave BMS 724, and the N-th slave BMS 726. The N-th slave BMS 726 may be the last among the plurality of slave BMS connected in series. Here, the master BMS 710 may recognize the number of connected slave BMS.

In embodiments, after setting the first ID, the first slave BMS 722 may transmit a first ID setting completion message 1212 to the master BMS 710 via the CAN bus. Also, in response to receiving an ID setting completion message from a subsequent slave BMS (e.g., a second slave BMS), the first switch SW_1 of the first slave BMS 722 may provide a path to connect the subsequent slave BMS to the CAN bus 730 in parallel with the master BMS 710. A subsequent slave BMS may set its own ID and then transmit an ID setting completion message to the master BMS 710 via the CAN bus. Accordingly, the master BMS 710 may recognize that each of the first slave BMS 722 and its subsequent slave BMS has set an ID.

In embodiments, the N-th slave BMS 726 may include an N-th switch SW_N. In the first mode, the N-th switch SW_N may provide either the third path S_N for connecting another slave BMS in series or the fourth path P_N for releasing the series connection with another slave BMS.

In the first mode, after setting the N-th ID, the N-th slave BMS 726 may transmit an N-th ID setting completion message to the (N-1)-th slave BMS 724 connected in series. Here, the (N-1)-th slave BMS 724 may already be in a state of parallel connection with the master BMS 710. Accordingly, in response to receiving the N-th ID setting completion message, the (N-1)-th slave BMS 724 may transmit the N-th ID setting completion message 1214 to the master BMS 710 via the CAN bus. Thus, the master BMS 710 may determine that IDs are set in each of the plurality of slave BMS 722, 724, 726.

In another embodiment, in response to receiving the N-th ID setting completion message, the (N-1)-th slave BMS 724 may control the (N-1)-th switch SW_(N-1) so that the N-th slave BMS 726 is connected in parallel with the master BMS 710. Through this, the N-th slave BMS 726, which has the N-th ID set, is connected to the CAN bus 730 and can perform CAN communication with the master BMS 710. The N-th slave BMS 726 may directly transmit the N-th ID setting completion message 1216 to the master BMS 710. Thus, the master BMS 710 may determine that ID setting has been completed for each of the plurality of slave BMS 722, 724, 726.

Through this configuration, once the master BMS 710 confirms that IDs have been set for the plurality of slave BMS, the master BMS 710 may transmit a command to the N-th slave BMS 726 to switch/toggle (TG_N) the contact of the N-th switch SW_N so as to disable the third path S_N and provide the fourth path P_N.

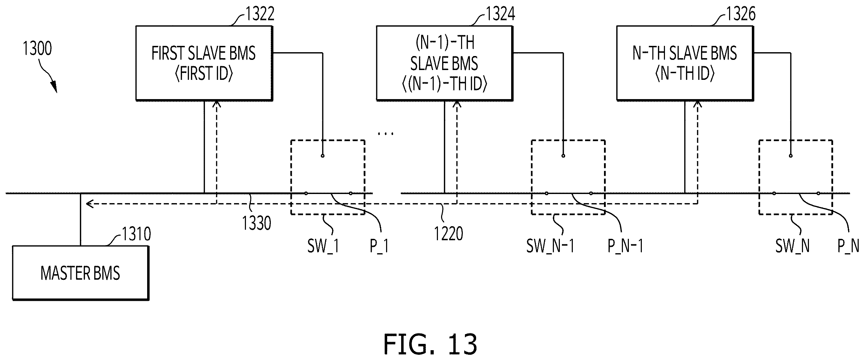

FIG. 13 is a diagram illustrating an example of how CAN communication is performed in an energy storage system 1300 according to embodiments of the present invention. Hereinafter, overlapping details between FIG. 13 and FIGS. 1-12 may be omitted.

In embodiments, the energy storage system 1300 may include a master BMS 1310 and a plurality of slave BMS 1322, 1323, 1326. The plurality of slave BMS may include a first slave BMS 1322, an (N-1)-th slave BMS 1324, and an N-th slave BMS 1326. In the first mode, each of the plurality of slave BMS 1322, 1323, 1326 may set its ID required for CAN communication. In the second mode, the ID set in each of the plurality of slave BMS 1322, 1323, 1326 may be used for broadcast communication.

In embodiments, the energy storage system 1300 may have a configuration in which the master BMS 1310 and the plurality of slave BMS 1322, 1323, 1326 are connected to a CAN bus 1330. In the second mode, in which the master BMS 1310 and the plurality of slave BMS 1322, 1323, 1326 are connected in parallel, the master BMS 1310 and the plurality of slave BMS 1322, 1323, 1326 may communicate with each other in a broadcast manner via the CAN bus 1330, using the CAN protocol and the IDs.

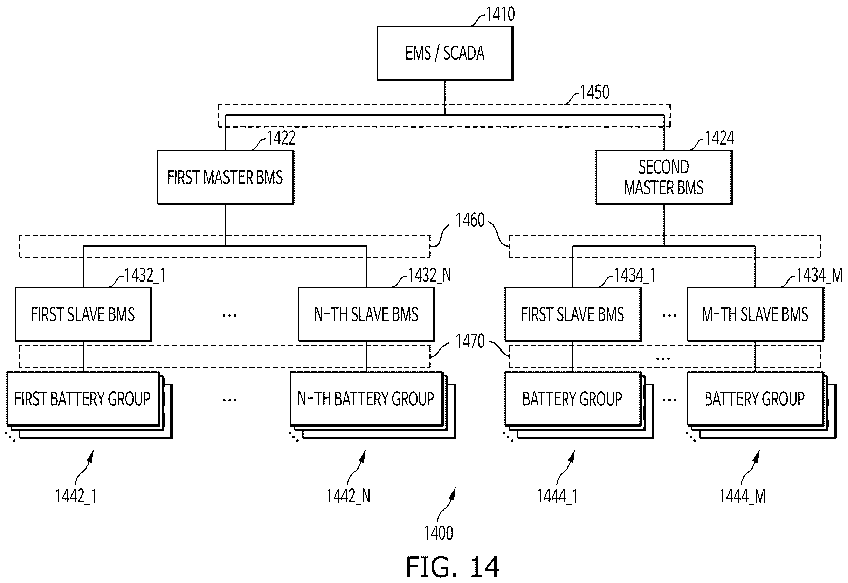

FIG. 14 is a diagram illustrating an example of communication performed in an energy storage system 1400 according to embodiments of the present invention. In embodiments, the energy storage system 1400 may include four hierarchical layers. Hereinafter, overlapping details between FIG. 14 and FIGS. 1-13 may be omitted.

In embodiments, the highest layer may include an Energy Management System (EMS) and/or a Supervisory Control and Data Acquisition (SCADA) system 1410. The highest layer may monitor and control the entire system. For example, the EMS may manage energy flow, and the SCADA may collect real-time data and check the system's status via remote control.

In embodiments, the second layer may include master BMS 1422, 1424. The second layer may include one or more master BMS, and the number of master BMS may be flexibly determined based on the system configuration. Each master BMS may be connected to slave BMS to request status information, collect such information, and transmit it to the higher layer.

In embodiments, the third layer may include slave BMS 1432_1, 1432_N, 1434_1, 1434_M. A single master BMS may manage one or more sets of slave BMS, and the configuration of the slave BMS set may be flexibly determined depending on system requirements. For example, a first master BMS 1422 may manage a first slave BMS 1432_1 through an N-th slave BMS 1432_N, and a second master BMS 1424 may manage a first slave BMS 1434_1 through an M-th slave BMS 1434_M.

In embodiments, each slave BMS may receive a request for status information from the master BMS and may respond by providing status information for a particular battery group to the master layer. The slave BMS may monitor and manage, in real time, conditions such as voltage, current, and temperature of the individual battery groups. Also, the slave BMS may perform cell balancing to achieve uniform charging and discharging among battery cells in the group.

In embodiments, the slave BMS may be implemented as rack BMS (RBMS). For example, the RBMS may be installed at each rack to measure and manage each rack's voltage, current, and temperature. In addition to basic status monitoring, the RBMS may detect anomalies in each battery cell or module and report such anomalies to the master BMS, thereby maintaining system stability and efficiency.

In embodiments, the fourth layer may include battery groups 1442_1-1442_N, 1444_1-1444_M. Each battery group may be composed of individual battery cells or battery modules. The battery group may also include a module BMS (MBMS) that manages cells or modules. The MBMS may monitor and control, in real time, parameters such as voltage, current, temperature, and state of charge (SOC) of individual battery cells or modules.

In embodiments, communication 1450 between the highest layer and the second layer may be performed using the Transmission Control Protocol/Internet Protocol (TCP/IP). TCP/IP is a communication protocol that ensures high-speed data transmission and network stability, facilitating efficient data transmission in large-scale energy management systems.

In embodiments, communication 1460 between the second layer and the third layer may be performed via CAN communication. CAN communication is a communication method providing high reliability and real-time data transmission among multiple nodes, minimizing collisions among nodes, and ensuring stable communication in the complex configuration of an energy storage system.

In embodiments, communication 1470 between the third layer and the fourth layer may be performed using a Universal Asynchronous Receiver-Transmitter (UART) method. UART is a serial communication protocol that provides stable communication at low power over short distances between battery cells or modules and a slave BMS, efficiently managing the status information of each cell in the battery group. The slave BMS may transmit such information to higher layers to support overall system operation.

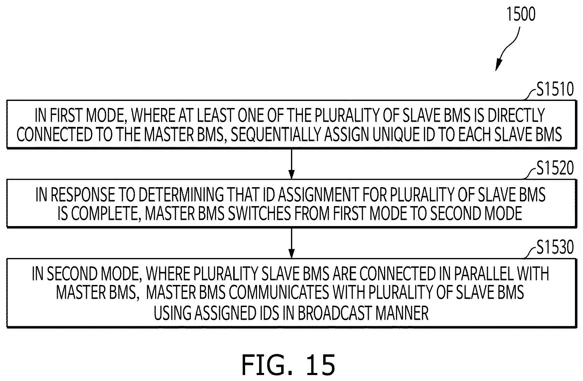

FIG. 15 is a flowchart 1500 illustrating an example of a communication method of an energy storage system according to embodiments of the present invention. In embodiments, the communication method 1500 of the energy storage system may be performed by at least one processor of the energy storage system.

As shown, method 1500 may begin with step S1510, where in a first mode in which at least one of a plurality of slave BMS is connected in series with a master BMS, sequentially setting a unique ID in each of the plurality of slave BMS is performed. Here, the first mode may be a mode in which at least one of the plurality of slave BMS are connected in series with the master BMS, and in which each of the plurality of slave BMS sets a unique ID as its own ID.

Then, in step S1520, in response to determining that ID setting of the plurality of slave BMS is completed, the master BMS may switch from the first mode to a second mode. Here, the second mode may be a mode in which the plurality of slave BMS are connected in parallel with the master BMS. Also, in the second mode, each of the plurality of slave BMS may be connected to the CAN bus, thereby being directly connected to the master BMS. In the first mode, as the plurality of slave BMS sequentially set their respective unique IDs, the number of slave BMS among the plurality of slave BMS that are connected in series with the master BMS may decrease, and the number of slave BMS connected in parallel with the master BMS may increase.

Next, in step S1530, in the second mode in which the plurality of slave BMS are connected in parallel with the master BMS, the master BMS may communicate, in a broadcast manner, with the plurality of slave BMS using the set IDs. Here, the second mode may be a mode in which the master BMS communicates, in a broadcast manner, with the plurality of slave BMS connected in parallel using the IDs set in each of the plurality of slave BMS and a first communication protocol. Also, in the second mode, the master BMS may communicate in a broadcast manner via the CAN bus using a CAN protocol with the plurality of slave BMS connected in parallel.

## Claims

1. An energy storage system (300) comprising:
a plurality of slave battery management systems (320); and
a master battery management system (310) connected to the plurality of slave battery management systems (320),
wherein, in a first mode, at least one of the plurality of slave battery management systems (320) is connected in series with the master battery management system (310), and
in a second mode, the plurality of slave battery management systems (320) are connected in parallel with the master battery management system (310).

2. The energy storage system (300) according to claim 1,
wherein the first mode is a mode in which each of the plurality of slave battery management systems (320) sets a unique identifier (ID) as its own ID.

3. The energy storage system (300) according to claim 2,
wherein the second mode is a mode in which the master battery management system (310) communicates, in a broadcast manner, with the plurality of slave battery management systems (320) connected in parallel using the ID in each of the plurality of slave battery management systems (320) and a first communication protocol.

4. The energy storage system (300) according to claim 3,
wherein, in the second mode, the master battery management system (310) communicates, in a broadcast manner via a CAN, in particular Controller Area Network, bus (330), with the plurality of slave battery management systems (320) connected in parallel, using a CAN protocol.

5. The energy storage system (300) according to an of claims 1 to 4,
wherein the plurality of slave battery management systems (320) comprise:
a first slave battery management system (322) directly connected to the master battery management system (310) via a CAN bus (330); and
a second slave battery management system (324) connected in series with the master battery management system (310) using a first switch (SW_1) included in the first slave battery management system (322) or connected in parallel with the master battery management system (310) via the CAN bus (330).

6. The energy storage system (300) according to claim 5,
wherein the first switch (SW_1) is configured to provide:
a first path (S_1) that connects the second slave battery management system (324) directly to the first slave battery management system (322) so as to connect the second slave battery management system (324) in series with the master battery management system (310); or
a second path (P_1) that connects the second slave battery management system (324) to the CAN bus (330) so as to connect the second slave battery management system (324) in parallel with the master battery management system (310).

7. The energy storage system (300) according to claim 5 or 6,
wherein, in the first mode, the master battery management system (310) transmits an ID setting command (410) to the first slave battery management system (322) that is directly connected, and,
in response to receiving the ID setting command (410), the first slave battery management system (322) sets a first ID as its own ID (412).

8. The energy storage system (300) according to claim 7,
wherein, in the first mode, after the first ID is set, the first slave battery management system (322) transmits the ID setting command (410) and the first ID to the second slave battery management system (324), and
in response to receiving the ID setting command (410) and the first ID, the second slave battery management system (324) sets a second ID as its own ID (432).

9. The energy storage system (300) according to claim 8,
wherein the second slave battery management system (324) is configured to, in response to receiving the ID setting command (410) and the first ID, set the second ID by adding a predetermined value to the first ID.

10. The energy storage system (300) according to claim 8 or 9,
wherein, in the first mode, after the second ID is set, the second slave battery management system (324) transmits an ID setting completion message (440) to the first slave battery management system (322) connected in series.

11. The energy storage system (300) according to claim 10,
wherein, in the first mode, in response to receiving the ID setting completion message (440), the first slave battery management system (322) controls the first switch (SW_1) so that the second slave battery management system (324) is connected in parallel with the master battery management system (310) via the CAN bus (330).

12. The energy storage system (700) according to any of claims 9 to 11,
wherein the plurality of slave battery management systems (720) further comprise a third slave battery management system (726) connected in series with the master battery management system (710) or in parallel with the master battery management system (710) via the CAN bus (730), and
in the first mode, in response to receiving the ID setting command and a unique ID set in a preceding slave battery management system (724), the third slave battery management system (726) sets a third ID as its own ID.

13. The energy storage system (700) according to claim 12,
wherein the third slave battery management system (726) comprises a third switch (SW_N) configured to provide a third path (S_N) for connecting the third slave battery management system (726) in series with another slave battery management system or a fourth path (P_N) for releasing a series connection with the other slave battery management system,
the third slave battery management system (726) receives a number of the plurality of slave battery management systems (720) from the master battery management system (710), and
based on determining that the third slave battery management system (726) is a last node based on the number of the plurality of slave battery management systems (720), the third slave battery management system (726) controls the third switch (SW_N) so that the fourth path (P_N) is provided.

14. The energy storage system (700) according to claim 12 or 13,
wherein the third slave battery management system (726) comprises a third switch (SW_N) configured to provide a third path (S_N) for connecting the third slave battery management system (726) in series with another slave battery management system or a fourth path (P_N) for releasing a series connection with the other slave battery management system,
upon expiration of a predetermined time without receipt of an ID setting completion message (1012) from the other slave battery management system, the third slave battery management system (726) controls the third switch (SW_N) so that the fourth path (P_N) is provided,
the third slave battery management system (726) transmits the third ID to the master battery management system (710) as an ID of a last node, and
in response to receiving the ID of the last node, the master battery management system (710) operates in the second mode.

15. A communication method (1500) of an energy storage system, comprising:
in a first mode in which at least one of a plurality of slave battery management systems is connected in series with a master battery management system, sequentially setting (S1510) a unique ID in each of the plurality of slave battery management systems;
in response to determining that ID setting of the plurality of slave battery management systems is completed, switching (S1520) from the first mode to a second mode by the master battery management system; and
in the second mode in which the plurality of slave battery management systems are connected in parallel with the master battery management system, communicating (S1530), in a broadcast manner, with the plurality of slave battery management systems by the master battery management system using the set IDs,
wherein, in the first mode, as the plurality of slave battery management systems sequentially set their respective unique IDs, the number of slave battery management systems among the plurality of slave battery management systems that are connected in series with the master battery management system decreases and the number of slave battery management systems connected in parallel with the master battery management system increases.
